# EUROPÄISCHE PATENTSCHRIFT

(11) **EP 4 359 752 B1**
(45) Veröffentlichungstag und Bekanntmachung des Hinweises auf die Patenterteilung: **30.07.2025**
(21) Anmeldenummer: 22740747.5
(22) Anmeldetag: 20.06.2022
(51) Int. Cl.: G01M 15/02, G01M 15/09

(54) **KONDITIONIERVORRICHTUNG FÜR EINEN PRÜFSTAND**
CONDITIONING DEVICE FOR A TEST BENCH
DISPOSITIF DE CONDITIONNEMENT POUR BANC D'ESSAI

(30) Priorität: 22.06.2021 AT 505082021
(43) Veröffentlichungstag der Anmeldung: 01.05.2024
(73) Patentinhaber: AVL List GmbH, 8020 Graz (AT)
(72) Erfinder: HOFER, Christian, 8010 Graz (AT); WIEDERKUM, Bernd, 2871 Zöbern (AT); LECHNER, Gerald, 8010 Graz (AT)
(74) Vertreter: Patentanwälte Pinter & Weiss OG
(86) Internationale Anmeldenummer: PCT/AT2022/060206
(87) Internationale Veröffentlichungsnummer: WO 2022/266682

(56) Entgegenhaltungen:
- EP-A2- 2 573 538
- WO-A1-2020/237278
- DE-A1- 102006 015 011

## Beschreibung

Die Erfindung betrifft eine Konditioniereinrichtung zur Versorgung eines Prüflings auf einem Prüfstand mit einem konditionierten Fluid, wobei die Konditioniereinrichtung eine Fluidleitung aufweist, die einen Fluid-Einlass mit einem Fluid-Auslass verbindet, wobei unkonditioniertes Fluid über den Fluid-Einlass der Konditioniereinrichtung zuführbar ist und konditioniertes Fluid über den Fluid-Auslass dem Prüfling zuführbar ist und wobei in der Fluidleitung zwischen dem Fluid-Einlass und dem Fluid-Auslass zumindest eine Konditioniereinheit zur Veränderung einer Zustandsgröße des Fluids vorgesehen ist. Die Erfindung betrifft weiters einen Prüfstand mit einem Prüfling und mit einer Konditioniereinrichtung zur Versorgung des Prüflings mit einem konditionierten Fluid sowie eine Verwendung der Konditioniereinrichtung zur Versorgung eines Prüflings auf einem Prüfstand mit einem konditionierten, insbesondere gasförmigen, Fluid.

Konditioniereinrichtungen werden an Prüfständen verwendet, um ein flüssiges oder gasförmiges Fluid, z.B. ein Betriebsfluid wie Luft, Schmiermittel oder Kraftstoff oder auch ein Kühlfluid wie Kühlluft oder Kühlflüssigkeit auf bestimmte vorgegebene Zustandsgrößen zu konditionieren und einem Prüfling zuzuführen. Die Art des Fluids und die einzustellenden Zustandsgrößen hängen dabei stark vom Prüfling ab. Als Prüfling werden beispielsweise einzelne Komponenten eines Fahrzeugs, wie z.B. Getriebe, Achsen, Wärmetauscher wie z.B. Kühler oder Kondensatoren usw. verwendet oder Antriebsaggregate, wie z.B. Verbrennungsmotoren, Elektromotoren, Brennstoffzellenantriebe oder Hybridaggregate. Auch Teilsysteme, wie z.B. Antriebsstränge eines Fahrzeugs oder ganze Fahrzeuge können als Prüfling verwendet werden. Je nach Art des zu testenden Prüflings kann auch der Prüfstand unterschiedlich ausgebildet sein, beispielsweise als Komponentenprüfstand, Motorprüfstand, Antriebsstrangprüfstand oder Fahrzeug- bzw. Rollenprüfstand. Das konditionierte Fluid wird verwendet, um den jeweiligen Prüfling unter verschiedenen Betriebszuständen zu testen. Dazu ist es oftmals gewünscht, eine oder mehrere Zustandsgrößen des verwendeten Fluids auf bestimmte vorgegebene Bedingungen zu konditionieren, z.B. auf eine bestimmte Temperatur, einen Druck, Feuchtigkeit, Durchflussmenge usw. Je nach Anwendungsfall kann es dabei beispielsweise gewünscht sein, die Zustandsgrößen über einen bestimmten Zeitraum möglichst konstant zu halten oder es könnte auch gewünscht sein, einen bestimmten gewünschten zeitlichen Verlauf einer Zustandsgröße einzustellen.

Konditioniereinrichtungen sind beispielsweise aus EP 1 600 622 B1, AT 520886 B1 oder EP 3 293 504 B1 bekannt. EP 1 600 622 B1 offenbart eine Vorrichtung und ein Verfahren zur Versorgung eines Verbrennungsmotors mit einem konditionierten Verbrennungsgas. AT 520886 B1 offenbart einen Prüfstand für einen Prüfling mit einer Einlassleitung, über welche ein Einlassgas zu dem Prüfling geleitet wird und einer Abgasleitung, mit welcher Abgas von dem Prüfling abgeleitet wird. EP 3 293 504 B1 offenbart ein Verfahren zur Regelung oder Steuerung der thermischen Bedingungen an einem Prüfstand. Mit bekannten Konditioniereinrichtungen ist ein dynamischer Betrieb mit raschen Änderungen einer Zustandsgröße des Fluids, insbesondere der Durchflussmenge, aber nur unzureichend möglich.

Weiterhin ist aus DE 10 2006 015 011 A1 eine Vorrichtung zur Sollwert-Regelung eines Eingangs- und Ausgangsdrucks in einer Fluid-Zufuhr- und eine Fluid-Abfuhrleitung bekannt, welche an eine Durchflussvorrichtung angeschlossen sind, die einer zeitvariablen Druck- und/oder Temperaturänderung unterliegt. Dabei sind die Fluid-Zufuhr- und die Fluid-Abfuhrleitung über zumindest eine Bypassleitung miteinander verbunden.

Aus der WO 2020/237278 A1 ist ein Fahrzeugprüfstand zum Prüfen eines Fahrzeuges. Der Fahrzeugprüfstand weist einen Kühlmittelkonditionierer auf, welcher mit einem Kühlmittelkreislauf des zu prüfenden Fahrzeugs über einen Fluidleitung verbunden ist, um das Kühlmittel des Kühlmittelkreislaufs des Fahrzeugs zischen den Kühlmittelkonditionierer und den Prüflingen (z.B. Verbrennungskraftmaschine, elektrische Maschine, Frequenzumrichter) geführt werden kann, wobei jeder einzelne Prüfling einen Kühlkreislauf aufweist, der durch einen Teilkreislauf des Kühlkreislaufs des Fahrzeugs zwischen dem jeweiligen Prüfling und dem Kühler ausgebildet ist.

Es ist daher eine Aufgabe der Erfindung, eine Konditioniereinrichtung bereitzustellen, die einfach aufgebaut ist und mit der ein möglichst dynamischer Betrieb mit raschen Änderungen einer Zustandsgröße in einem möglichst variablen Wertebereich der Zustandsgröße möglich ist.

Die Aufgabe wird erfindungsgemäß dadurch gelöst, dass eine erste Bypass-Leitung zur Einstellung einer vorgegebenen, im Betrieb vorzugsweise konstanten, Durchflussmenge des Fluids in der ersten Bypass-Leitung vorgesehen ist, welche eine zwischen dem Fluid-Einlass und der zumindest einen Konditioniereinheit liegende erste Bypass-Ausmündung aus der Fluidleitung mit einer zwischen der zumindest einen Konditioniereinheit und dem Fluid-Auslass liegenden ersten Bypass-Einmündung in die Fluidleitung verbindet, dass eine zweite Bypass-Leitung zur Einstellung einer veränderlichen Durchflussmenge des Fluids in der zweiten Bypass-Leitung vorgesehen ist, welche eine zwischen der ersten Bypass-Ausmündung und der zumindest einen Konditioniereinheit liegende zweite Bypass-Ausmündung aus der Fluidleitung mit einer zwischen der zumindest einen Konditioniereinheit und der ersten Bypass-Einmündung liegenden zweiten Bypass-Einmündung in die Fluidleitung verbindet, dass in der Fluidleitung zwischen der ersten Bypass-Einmündung und der zweiten Bypass-Einmündung eine erste Durchfluss-Messeinrichtung vorgesehen ist und dass in der Fluidleitung zwischen der ersten Bypass-Einmündung und dem Fluid-Auslass oder zwischen dem Fluid-Einlass und der ersten Bypass-Ausmündung ein, vorzugsweise elektrisch ansteuerbares, erstes Stellorgan zur Veränderung der Fluid-Massenstroms vorgesehen ist. Die Kombination der beiden Bypass-Leitungen ermöglicht eine sehr variable Steuerung der Durchflussmenge des Fluids in einem breiten Wertebereich, bis hin zu einer Reduktion des Durchflussmenge am Fluid-Auslass auf Null und ohne wesentliche Verringerung der Messgenauigkeit der Durchflussmenge. Zudem kann durch die Rezirkulierung des konditionierten Fluids in der Konditioniereinrichtung über die Bypass-Leitungen eine Verringerung des Energiebedarfs für die Konditionierung des Fluids erreicht wird.

Erfindungsgemäss ist in der zweiten Bypass-Leitung ein, vorzugsweise elektrisch ansteuerbares, zweites Stellorgan zur Einstellung der veränderlichen Durchflussmenge des Fluids vorgesehen und/oder sind in der ersten Bypass-Leitung ein Drosselorgan zur Einstellung der vorgegebenen, vorzugsweise konstanten, Durchflussmenge und eine zweite Durchfluss-Messeinrichtung vorgesehen. Dadurch wird eine einfache konstruktive Ausführungsform geschaffen, mit der eine exakte Steuerung der Durchflussmenge mit raschen Änderungen möglich ist.

Es kann vorteilhaft sein, wenn mehrere Konditioniereinheiten zur Veränderung jeweils einer Zustandsgröße des Fluids zwischen der zweiten Bypass-Ausmündung und der zweiten Bypass-Einmündung, vorzugsweise seriell, in der Fluidleitung angeordnet sind. Als Konditioniereinheit kann beispielswiese eine Fördereinrichtung und/oder eine Wärmesenke und/oder eine Wärmequelle und/oder ein Befeuchter und/oder ein Trockner vorgesehen sein. Die Fördereinrichtung kann dabei beispielsweise eine Pumpe oder ein Gebläse vorgesehen sein, als Wärmesenke beispielsweise ein Wärmetauscher. Als Wärmequelle kann z.B. eine elektrische Heizeinrichtung oder ein Wärmetauscher vorgesehen sein und als Befeuchter kann z.B. ein Dampferzeuger vorgesehen. Dadurch ist ein flexiblerer Einsatz der Konditioniereinheit sowohl für gasförmige, als auch flüssige Fluide in verschiedenen Anwendungen möglich.

Die Konditioniereinrichtung kann vorzugsweise auch ein Gehäuse aufweisen, wobei zumindest die zumindest eine Konditioniereinheit im Gehäuse angeordnet ist. Vorteilhafterweise ist zumindest auch die zweite Bypass-Leitung im Gehäuse angeordnet, wobei besonders bevorzugt beide Bypass-Leitungen im Gehäuse angeordnet sind. Der Fluid-Auslass und/oder der Fluid-Einlass können dabei am Gehäuse angeordnet sein oder außerhalb des Gehäuses liegen. Dadurch wird eine kompakte Vorrichtung geschaffen, die besser von äußeren, z.B. thermischen oder mechanischen, Einflüssen geschützt ist.

In der Konditioniereinrichtung ist vorzugsweise eine Konditioniereinrichtungs-Steuerungseinheit zur Steuerung der Konditioniereinrichtung vorgesehen, wobei die Konditioniereinrichtungs-Steuerungseinheit vorzugsweise im Gehäuse angeordnet ist. Die Konditioniereinrichtungs-Steuerungseinheit ist vorzugsweise zum Empfangen von Messwerten mit der ersten und der zweiten Durchfluss-Messeinrichtung verbunden. Vorzugsweise ist die Konditioniereinrichtungs-Steuerungseinheit auch mit der zumindest einen Konditioniereinheit zur Steuerung der zumindest einen Konditioniereinheit verbunden und/oder mit dem ersten und/oder zweiten Stellorgan zur Steuerung des ersten und/oder zweiten Stellorgans verbunden. Dadurch wird eine im Wesentlichen autarke Vorrichtung geschaffen.

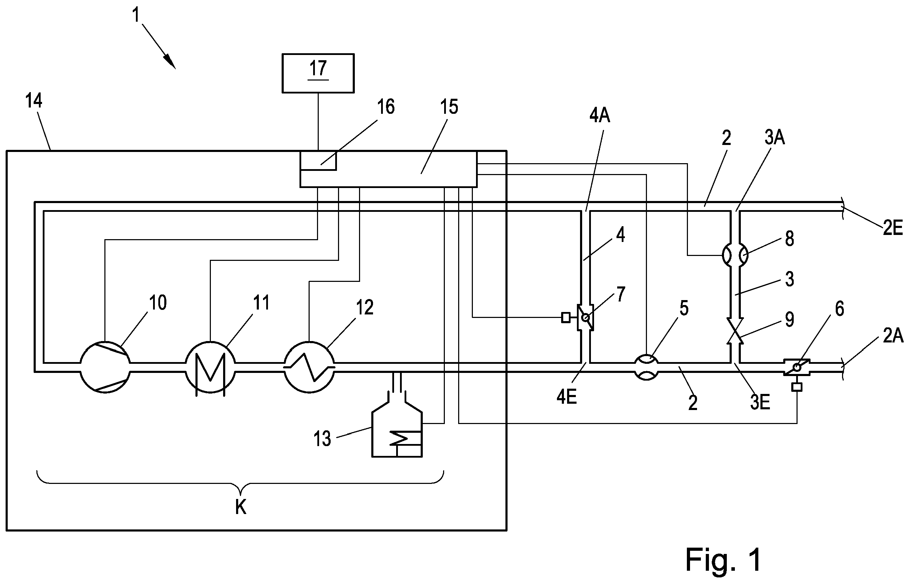

Die Konditioniereinrichtungs-Steuerungseinheit kann auch eine Kommunikations-Schnittstelle zur Verbindung der Konditioniereinrichtung mit einer übergeordneten Steuerungseinheit aufweisen. Dadurch kann die Konditioniereinrichtung in vorteilhafter Weise in eine Prüfstands-Steuerung eingebunden werden und zentral gesteuert werden. Die gegenständliche Erfindung wird nachfolgend unter Bezugnahme auf die Figuren 1 bis 2 näher erläutert, die beispielhaft, schematisch und nicht einschränkend vorteilhafte Ausgestaltungen der Erfindung zeigen. Dabei zeigt
Fig.1 eine Konditioniereinrichtung in einer vorteilhaften Ausführungsform und
Fig.2 einen Prüfstand mit einem Prüfling und mit einer Konditioniereinrichtung.

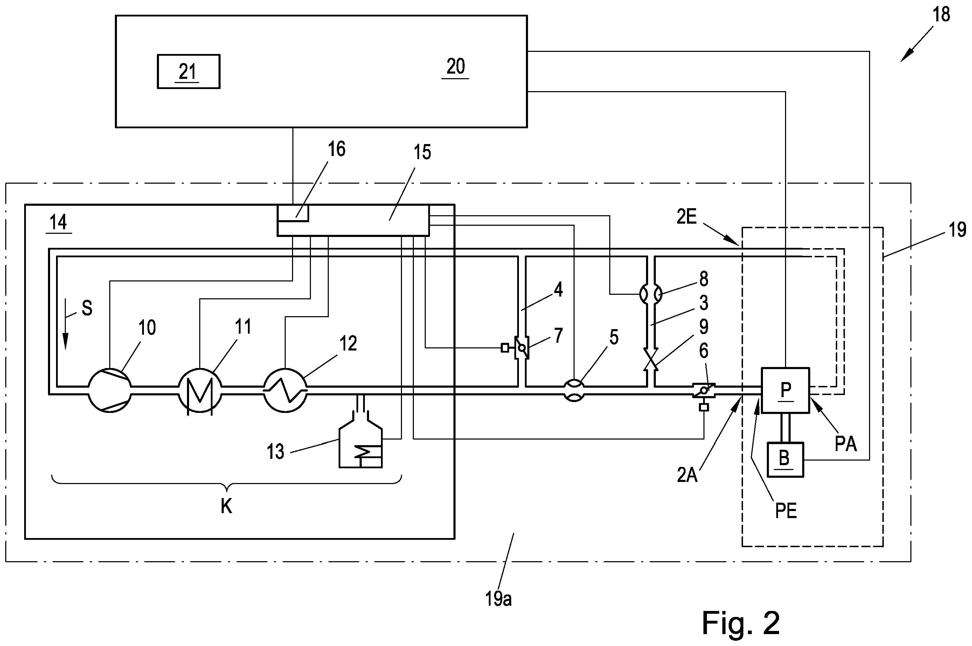

In Fig.1 ist eine vorteilhafte Ausführungsform der erfindungsgemäßen Konditioniereinrichtung 1 dargestellt. Die Konditioniereinrichtung 1 weist eine Fluidleitung 2 auf, welche einen Fluid-Einlass 2E mit einem Fluid-Auslass 2A strömungsmechanisch verbindet, sodass ein Fluid vom Fluid-Einlass 2E zum Fluid-Auslass 2A strömen kann. Besonders bevorzugt wird die Konditioniereinrichtung 1 zur Konditionierung eines gasförmigen Fluids, insbesondere Luft, auf einem Prüfstand verwendet, wie nachfolgend anhand von Fig.2 noch näher erläutert wird. In der Fluidleitung 2 ist zumindest eine Konditioniereinheit K zur Konditionierung des Fluids vorgesehen. Unter Konditionieren ist dabei allgemein die Veränderung einer oder mehrerer Zustandsgrößen des Fluids zu verstehen, um einen vorgegebenen Wert der Zustandsgrößen einzustellen. Bekannte Zustandsgrößen sind z.B. der Druck, die Temperatur, die Durchflussmenge (Volumenstrom oder Massenstrom), die Luftfeuchte, usw.

In der Konditioniereinrichtung 1 ist eine erste Bypass-Leitung 3 zur Einstellung einer zeitlich konstanten Durchflussmenge des Fluids in der ersten Bypass-Leitung 3 vorgesehen, welche eine zwischen dem Fluid-Einlass 2E und der zumindest einen Konditioniereinheit K liegende erste Bypass-Ausmündung 3A der Fluidleitung 2 mit einer zwischen der zumindest einen Konditioniereinheit K und dem Fluid-Auslass 2A liegenden ersten Bypass-Einmündung 3E der Fluidleitung 2 verbindet. Weiters ist in der Konditioniereinrichtung 1 eine zweite Bypass-Leitung 4 zur Einstellung einer zeitlich veränderlichen Durchflussmenge des Fluids in der zweiten Bypass-Leitung 4 vorgesehen, welche eine zwischen der ersten Bypass-Ausmündung 3A und der zumindest einen Konditioniereinheit K liegende zweite Bypass-Ausmündung 4A der Fluidleitung 2 mit einer zwischen der zumindest einen Konditioniereinheit K und der ersten Bypass-Einmündung 3E liegenden zweiten Bypass-Einmündung 4E der Fluidleitung 2 verbindet.

In der Fluidleitung 2 ist zwischen der ersten Bypass-Einmündung 3E und der zweiten Bypass-Einmündung 4E eine erste Durchfluss-Messeinrichtung 5 vorgesehen und in der Fluidleitung 2 zwischen der ersten Bypass-Einmündung 3E und dem Fluid-Auslass 2A ist ein, vorzugsweise elektrisch ansteuerbares, erstes Stellorgan 6 zur Veränderung der Durchflussmenge des Fluids vorgesehen. Das erste Stellorgan 6 könnte aber grundsätzlich auch zwischen dem Fluid-Einlass 2E und der ersten Bypass-Ausmündung 3A in der Fluidleitung 2 angeordnet sein. Unter der Durchflussmenge des Fluids ist im Rahmen der Erfindung ein Fluid-Massenstrom oder ein Fluid-Volumenstrom zu verstehen.

Um die Durchflussmenge in der zweiten Bypass-Leitung 4 verändern zu können, kann beispielsweise ein, vorzugsweise elektrisch ansteuerbares, zweites Stellorgan 7 in der zweiten Bypass-Leitung 4 vorgesehen sein. Um eine konstante Durchflussmenge in der ersten Bypass-Leitung 3 zu erreichen, ist vorzugsweise ein Drosselorgan 9 vorgesehen. Unter einem Drosselorgan 9 ist bekanntermaßen eine Einrichtung zu verstehen, die einen geringeren Strömungsquerschnitt aufweist, als die erste Bypass-Leitung 3. Der Strömungsquerschnitt des Drosselorgans 9 kann im einfachsten Fall unveränderlich sein, sodass als Drosselorgans 9 beispielsweise eine Blende mit unveränderlichem Strömungsquerschnitt vorgesehen sein kann. Vorzugsweise ist der Strömungsquerschnitt des Drosselorgans 9 aber veränderlich, beispielsweise manuell einstellbar, um die Konditioniereinrichtung 1 kalibrieren zu können. Das Drosselorgan 9 könnte aber beispielsweise auch als vorzugsweise elektrisch ansteuerbares Stellorgan ausgebildet sein, analog wie die Stellorgane 6, 7. Während des Betriebs der Konditioniereinrichtung 1 wird der Strömungsquerschnitt des Drosselorgans 9 aber vorzugsweise nicht mehr verändert.

Um eine Durchflussmenge (Volumenstrom oder Massenstrom) des Fluids erfassen zu können, ist vorzugsweise auch eine zweite Durchfluss-Messeinrichtung 8 in der ersten Bypass-Leitung 3 vorgesehen, die im gezeigten Beispiel zwischen der ersten Bypass-Ausmündung 3A und dem Drosselorgan 9 angeordnet ist. Durch die Kombination der beiden Bypass-Leitungen 3, 4 kann in Abhängigkeit der gewünschten Durchflussmenge am Fluid-Auslass 2A ein Teil des konditionierten Fluids in der Konditioniereinrichtung 1 rezirkuliert werden, wodurch eine sehr variable Steuerung der Durchflussmenge in einem großen Wertebereich ermöglicht wird, bis hin zu einer Reduktion der Durchflussmenge am Fluid-Auslass 2A auf Null. Unter Rezirkulieren ist dabei die Entnahme von konditioniertem Fluid stromabwärts der zumindest einen Konditioniereinheit K und die Zuführung stromaufwärts der zumindest einen Konditioniereinheit K zu verstehen.

Als Durchfluss-Messeinrichtungen 5, 8 können gängige Sensoren verwendet werden, die geeignet sind, die Durchflussmenge des Fluids (Volumenstrom oder Massenstrom) zu erfassen. Geeignete Durchfluss-Messeinrichtungen 5, 8 sind beispielsweise Differenzdruck-Sensoren, wie z.B. Messblenden, Ultraschall-Sensoren, Magnetisch-induktive Sensoren, Coriolis-Sensoren, etc. Als elektrisch ansteuerbare Stellorgane 6, 7 werden vorzugsweise Stellventile mit Servo-Getriebemotoren verwendet. Um einen möglichst dynamischen Betrieb der Konditioniereinrichtung 1 zu ermöglichen, werden vorzugsweise Durchfluss-Messeinrichtungen 5, 8 mit möglichst geringer Reaktionszeit verwendet, sodass Änderungen der Durchflussmenge mit möglichst geringem Zeitverzug erfasst werden können. Gleichfalls werden vorzugsweise Stellorgane 6, 7 mit möglichst geringen Schaltzeiten verwendet, sodass rasch auf Steuerbefehle reagiert werden kann. Die T90-Reaktionszeit der Durchfluss-Messeinrichtungen 5, 8 beträgt vorzugsweise maximal 1 Sekunde und als Stellorgane 6, 7 werden vorzugsweise Stellventile mit Servo-Planetengetriebemotoren mit einer Drehzahl von 200 U/min ±10% verwendet.

Um mehrere Zustandsgrößen des Fluids verändern zu können sind vorzugsweise mehrere Konditioniereinheiten K vorgesehen, die beispielsweise seriell zwischen der zweiten Bypass-Ausmündung 4A und der zweiten Bypass-Einmündung 4E in der Fluidleitung 2 angeordnet sein können. Im Beispiel gemäß Fig.1 sind beispielsweise in Strömungsrichtung S gesehen eine Fördereinrichtung 10 zur Förderung des Fluids bzw. zur Erzeugung eines DruckGradienten vorgesehen. Stromabwärts sind danach eine Wärmesenke 11, eine Wärmequelle 12 und eine Befeuchter 13 vorgesehen. Auch weitere Konditioniereinheiten K, wie z.B. ein nicht dargestellter Trockner könnten zusätzlich vorgesehen sein. Die konkrete Ausgestaltung hängt im Wesentlichen von der bestimmungsgemäßen Verwendung der Konditioniereinrichtung 1 ab und insbesondere von der Art des verwendeten Fluids ab (gasförmig oder flüssig). Typischerweise sind zumindest eine Fördereinrichtung 10, eine Wärmesenke 11 und eine Wärmequelle 12 vorgesehen. Auf einen Befeuchter 13 kann beispielsweise verzichtet werden, wenn keine Veränderung der Luftfeuchtigkeit erforderlich ist.

Im Fall eines flüssigen Fluids kann als Fördereinrichtung 10 beispielsweise eine geeignete Pumpe vorgesehen sein. Im Fall eines gasförmigen Fluids, wie z.B. Luft, kann ein Gebläse als Fördereinrichtung 10 vorgesehen sein. Die Fördereinrichtung 10 könnte im einfachsten Fall beispielsweise so ausgeführt sein, dass diese im Betrieb der Konditioniereinrichtung 1 eine konstante, unveränderliche Durchflussmenge erzeugt. Die Fördereinrichtung 10 könnte aber auch variabel steuerbar sein, um den Druckgradienten und folglich die Durchflussmenge variabel verändern zu können. Die Steuerung bzw. Regelung der (Gesamt-) Durchflussmenge kann beispielsweise über eine Drehzahlsteuerung der Fördereinrichtung 10 erfolgen, z.B. mittels einer Kennfeld-basierten Steuerung oder mittels einer Regelung in Abhängigkeit eines Istwerts. Der Istwert kann dabei z.B. von einer zusätzlichen (nicht dargestellten) Durchfluss-Messeinrichtung erfasst werden, die beispielsweise zwischen der zweiten Bypass-Ausmündung 4A und der Fördereinrichtung 10 in der Fluidleitung 2 angeordnet sein kann.

Als Wärmesenke 11 und/oder Wärmequelle 12 kann beispielsweise ein geeigneter Wärmetauscher vorgesehen sein. Als Wärmequelle 12 könnte auch eine geeignete elektrische Heizeinrichtung vorgesehen sein und als Befeuchter 13 kann z.B. ein Dampferzeuger vorgesehen sein. Natürlich können auch eine oder mehrere nicht dargestellte Messeinrichtungen zur Erfassung jeweils einer Zustandsgröße vorgesehen sein, beispielsweise ein Temperatursensor, ein Drucksensor oder ein Luftfeuchtesensor. Die zumindest eine Konditioniereinheit K kann beispielsweise in einem vorzugsweise geschlossenen Gehäuse 14 angeordnet sein, sodass die zumindest eine Konditioniereinheit K von äußeren Einflüssen geschützt und gegenüber der Umgebung isoliert ist. Auch die zweite Bypass-Leitung 4 oder beide Bypass-Leitungen 3, 4 könnten natürlich im Gehäuse 14 angeordnet sein. Der Fluid-Auslass 2A und/oder der Fluid-Einlass 2E könnten dabei beispielsweise auch direkt am Gehäuse 4 angeordnet sein, um eine kompakte Konditioniereinrichtung 1 zu erzeugen. Natürlich könnten der Fluid-Auslass 2A und/oder der Fluid-Einlass 2E aber auch außerhalb des Gehäuses 14 liegen, wie in Fig.1 dargestellt ist.

In der Konditioniereinrichtung 1 kann auch eine Konditioniereinrichtungs-Steuerungseinheit 15 zur Steuerung der Konditioniereinrichtung 1 vorgesehen sein. Die Konditioniereinrichtungs-Steuerungseinheit 15 ist insbesondere zur Steuerung der zumindest einen Konditioniereinheit K und/oder zur Steuerung des ersten und/oder zweiten Stellorgans 6, 7 vorgesehen. Die Konditioniereinrichtungs-Steuerungseinheit 15 ist vorzugsweise auch mit der ersten und/oder der zweiten Durchfluss-Messeinrichtung 5, 8 verbunden, um Messwerte der Durchflussmenge (Volumenstrom oder Massenstrom) zu empfangen. Die Konditioniereinrichtungs-Steuerungseinheit 15 kann beispielsweise in einem gemeinsamen Gehäuse 14 mit der/den Konditioniereinheit/en K angeordnet sein. Es kann auch vorteilhaft sein, wenn die Konditioniereinrichtungs-Steuerungseinheit 15 eine Kommunikations-Schnittstelle 16 zur Anbindung der Konditioniereinrichtung 1 an eine übergeordnete Steuerungseinheit 17 aufweist. Die oben genannten allfälligen weiteren Messeinrichtungen können natürlich ebenfalls mit der Konditioniereinrichtungs-Steuerungseinheit 15 verbunden sein, um die erfassten Messwerte (z.B. Temperatur, Druck, Luftfeuchte) an die Konditioniereinrichtungs-Steuerungseinheit 15 zu übermitteln.

Dadurch kann die Konditioniereinrichtung 1 beispielsweise in einen Prüfstand 18 integriert und von einer Prüfstands-Steuerungseinheit 20 (Fig.2) angesteuert werden. Die Konditioniereinrichtungs-Steuerungseinheit 15 kann beispielsweise eine geeignete Hard- und/oder Software aufweisen. Vorzugsweise ist in der Konditioniereinrichtungs-Steuerungseinheit 15 und/oder in der Prüfstands-Steuerungseinheit 20 auch eine geeignete Regelungseinheit vorgesehen, mit der eine oder mehrere Zustandsgrößen des Fluids auf vorgegebene Sollwerte geregelt werden können. Die Regelungseinheit kann dazu beispielsweise einen geeigneten Regler enthalten, wie z.B. einen Pl-Regler oder PID-Regler, modellbasierten Regler oder 2-Freiheitsgrade-Regler. In der Konditioniereinrichtungs-Steuerungseinheit 15 und/oder in der Prüfstands-Steuerungseinheit 20 kann auch ein Simulationsmodell 21 zur Simulation eines Betriebszustandes eines Prüflings P implementiert sein, wie nachfolgend anhand Fig.2 noch näher erläutert wird.

In Fig.2 ist ein Prüfstand 18 zur Durchführung eines Prüflaufs mit einem Prüfling P und mit einer Konditioniereinrichtung 1 zur Versorgung des Prüflings P mit einem konditionierten Fluid dargestellt. Die Konditioniereinrichtung 1 kann beispielsweise gemäß Fig.1 ausgebildet sein, wobei der Fluid-Auslass 2A der Konditioniereinrichtung 1 mit einem Fluid-Eintritt PE des Prüflings P verbunden ist. Es kann beispielsweise ein geschlossener Konditionierkreislauf realisiert werden, indem ein mit dem Fluid-Eintritt PE kommunizierender Fluid-Austritt PA des Prüflings P mit dem Fluid-Einlass 2E der Fluidleitung 2 der Konditioniereinrichtung 1 verbunden ist. Die Verbindung kann beispielsweise über eine geeignete Rohrleitung erfolgen, wie in Fig.2 gestrichelt angedeutet ist. Ggf. könnten natürlich auch nicht dargestellte weitere Prüflinge von der Konditioniereinrichtung 1 mit konditioniertem Fluid versorgt werden.

Es könnte aber auch ein offener Konditionierkreislauf vorgesehen sein, bei dem der Fluid-Einlass 2E der Fluidleitung 2 der Konditioniereinrichtung 1 mit einer externen Fluid-Quelle verbunden ist und der Fluid-Austritt PA des Prüflings P mit einer externen Fluid-Senke verbunden ist. Der Prüfling P kann beispielsweise in einer geschlossenen Prüfzelle 19 des Prüfstands 18 angeordnet sein, wie in Fig.2 durch die gestrichelte Umrandung angedeutet ist. Die Fluid-Quelle könnte dabei z.B. innerhalb oder außerhalb der Prüfzelle 19 angeordnet sein. Alternativ oder zusätzlich könnte auch die Fluid-Senke innerhalb oder außerhalb der Prüfzelle 19 vorgesehen sein. Die Konditioniereinrichtung 1 kann dabei innerhalb der Prüfzelle 19 angeordnet sein, wie in Fig.1 durch die Prüfzelle 19a angedeutet ist. Die Konditioniereinrichtung 1 könnte aber auch außerhalb der Prüfzelle 19 angeordnet sein und mit einer oder mehrere geeigneten Leitungen mit dem Prüfling P verbunden sein.

Als Prüfling P können beispielsweise einzelne Komponenten eines Fahrzeugs, ein Antriebsstrang eines Fahrzeugs oder das gesamte Fahrzeug verwendet werden. Man spricht dann auch von einem Komponentenprüfstand, Antriebsstrangprüfstand oder Fahrzeug- bzw. Rollenprüfstand. Je nachdem, welche Art von Prüfling P verwendet wird, können verschiedene zu konditionierende Fluide erforderlich sein, beispielsweise zum Betrieb des Prüflings P erforderliche Betriebsfluide, wie z.B. Luft oder Kraftstoff oder auch Kühlfluide zur Kühlung des Prüflings P wie z.B. Kühlluft oder flüssiges Kühlmittel. Wenn als Prüfling P beispielsweise ein Verbrennungsmotor oder eine Brennstoffzelle verwendet wird, kann die Konditioniereinrichtung 1 beispielsweise zur Konditionierung von Luft verwendet werden, die als Betriebsfluid für den Betrieb des Verbrennungsmotors oder der Brennstoffzelle erforderlich ist. In diesem Fall ist vorzugsweise ein offener Konditionierkreislauf vorgesehen, wobei die Fluid-Quelle z.B. auch die Umgebungsluft der Prüfzelle 19, 19a sein kann und somit innerhalb der Prüfzelle 19, 19a liegt. Die Fluid-Senke liegt in diesem Fall vorzugsweise außerhalb der Prüfzelle 19, 19a und kann z.B. eine geeignete Abluftanlage bzw. Abgasanlage sein, die ggf. Abgasmesstechnik umfassen kann.

Die Konditioniereinrichtung 1 kann aber beispielsweise auch zur Konditionierung eines gasförmigen Kühlfluids wie z.B. Kühlluft verwendet werden. Beispielsweise könnte der Prüfstand 18 ein Rollenprüfstand sein und der Prüfling P könnte ein Fahrzeug mit Verbrennungsmotor sein. Die Konditioniereinrichtung 1 könnte in diesem Fall beispielsweise zur Konditionierung von Luft verwendet werden, welche einen Wärmetauscher des Fahrzeugs (z.B. Ladeluftkühler oder Wasserkühler) durchströmt, um den Fahrtwind zu simulieren. Auch in diesem Fall kann die Fluid-Quelle z.B. die Umgebungsluft der Prüfzelle 19, 19a sein und somit innerhalb der Prüfzelle 19, 19a liegen. Die Fluid-Senke könnte hierbei ebenfalls innerhalb der Prüfzelle liegen oder ggf. auch außerhalb, wenn die vom Prüfling erwärmte bzw. verbrauchte Luft gesammelt und aus der Prüfzelle 19, 19a abgeführt wird.

Die Konditioniereinrichtung 1 kann aber beispielsweise auch zur Konditionierung eines flüssigen Fluids wie z.B. Wasser, Öl, Kraftstoff oder Kühlmittel verwendet werden. Beispielsweise könnte der Prüfstand 18 ein Getriebeprüfstand sein und der Prüfling P könnte ein Getriebe eines Fahrzeugs sein. Die Konditioniereinrichtung 1 könnte in diesem Fall beispielsweise zur Konditionierung von Getriebeöl verwendet werden. Beispielsweise könnte der Prüfstand 18 auch ein Motoren-, Brennstoffzellen- oder Batterieprüfstand sein und der Prüfling P könnte ein Verbrennungs- oder Elektromotor, eine Brennstoffzelle oder eine Batterie sein. Die Konditioniereinrichtung 1 könnte in diesem Fall beispielsweise zur Konditionierung von Kühlmittel verwendet werden, das zur Kühlung des Prüflings P verwendet wird und den Prüfling P durchströmt. In diesem Fall wird vorzugsweise ebenfalls ein geschlossener Konditionierkreislauf vorgesehen.

Der Prüfstand 18 weist vorzugsweise eine Prüfstands-Steuerungseinheit 20 zur Steuerung des Prüfstands 18 auf. Die Prüfstands-Steuerungseinheit 20 kann beispielsweise wiederum eine geeignete Hard- und/oder Software aufweisen. Am Prüfstand 18 kann auch eine Belastungsmaschine B zum Antrieb oder zur Belastung des Prüflings P vorgesehen sein. Als Belastungsmaschine B kann in bekannter Weise z.B. eine elektrische Maschine, wie z.B. eine Asynchronmaschine. Über die Prüfstands-Steuerungseinheit 20 können beispielsweise der Prüfling P und ggf. verschiedene weitere Funktionen des Prüfstands 18 gesteuert werden, beispielsweise die vorzugsweise automatisierte Durchführung eines vorgegebene Prüflaufs mit dem Prüfling P, eine Messdatenerfassung am Prüfling P oder die Steuerung der Konditioniereinrichtung 1, usw. Die Belastungsmaschine B kann ebenfalls über die Prüfstands-Steuerungseinheit 20 gesteuert werden, um bei der Durchführung eines vorgegebene Prüflaufs bestimmte Belastungen auf den Prüfling P zu simulieren.

Die Konditioniereinrichtung 1 könnte unmittelbar von der Prüfstands-Steuerungseinheit 20 angesteuert werden, indem die zumindest eine Konditioniereinheit K und/oder das erste und/oder zweite Stellorgan 6, 7 und/oder die erste und/oder zweite Durchfluss-Messeinrichtung 5, 8 unmittelbar mit der Prüfstands-Steuerungseinheit 20 verbunden sind. In diesem Fall könnte auf eine separate Konditioniereinrichtungs-Steuerungseinheit 15 auch verzichtet werden. Die Konditioniereinrichtung 1 könnte aber auch mittelbar von der Prüfstands-Steuerungseinheit 20 angesteuert werden, indem die Konditioniereinrichtungs-Steuerungseinheit 15 der Konditioniereinrichtung 1 über die Kommunikations-Schnittstelle 16 mit der Prüfstands-Steuerungseinheit 20 verbunden ist, wie in Fig.2 dargestellt ist. Steuerbefehle wie z.B. Sollwerte könnten dann von der übergeordneten Prüfstands-Steuerungseinheit 20 an die Konditioniereinrichtungs-Steuerungseinheit 15 übermittelt werden und die Konditioniereinrichtungs-Steuerungseinheit 15 steuert oder regelt die verfügbaren Konditioniereinheiten K, um die zumindest eine Zustandsgröße einzustellen.

In der Konditioniereinrichtungs-Steuerungseinheit 15 und/oder in der Prüfstands-Steuerungseinheit 20 ist vorzugsweise auch ein Simulationsmodell 21 zur Simulation eines Betriebszustandes eines Prüflings P implementiert. Auf Basis des Simulationsmodells 21 kann die Konditioniereinrichtungs-Steuerungseinheit 15 und/oder die Prüfstands-Steuerungseinheit 20 die zumindest eine Zustandsgröße des Fluids durch Steuerung oder Regelung der zumindest einen Konditioniereinheit K verändern. Beispielsweise können mittels des im Simulationsmodells 21 zeitliche Verläufe einer oder mehrerer Zustandsgrößen des Fluids simuliert werden. Beispielsweise kann am Prüfstand 18 ein Verbrennungsmotor als Prüfling P verwendet werden und die Konditioniereinrichtung 1 kann zur Konditionierung von Luft als Betriebsfluid für den Verbrennungsmotor verwendet werden. Über das Simulationsmodell 21 kann dabei beispielsweise eine virtuelle Fahrt eines Fahrzeugs, in dem der Verbrennungsmotor verwendet wird, simuliert werden. Dabei können beispielsweise Umgebungsbedingungen des virtuellen Fahrzeugs auf einer virtuellen Testfahrt simuliert werden. Dabei könnte z.B. eine Höhensimulation mit einem zeitlich veränderlichen Umgebungsdruck und einer zeitlich veränderlichen Umgebungstemperatur simuliert werden.

Über das Simulationsmodell 21 kann z.B. ein konstanter Sollwert oder ein variabler zeitlicher Verlauf eines Sollwertes für eine oder mehrere Zustandsgrößen des Fluids zur Verfügung gestellt werden. Der Sollwert bzw. der Verlauf des Sollwerts kann von der Konditioniereinrichtungs-Steuerungseinheit 15 und/oder der Prüfstands-Steuerungseinheit 20 z.B. mittels einer geeigneten Regelungseinheit eingeregelt werden. Dazu können der Konditioniereinrichtungs-Steuerungseinheit 15 und/oder der Prüfstands-Steuerungseinheit 20 verfügbare Messwerte als Istwerte zugeführt werden und die Konditioniereinrichtungs-Steuerungseinheit 15 und/oder der Prüfstands-Steuerungseinheit 20 kann Stellgrößen an die verfügbaren Stellglieder übermitteln.

Im gezeigten Beispiel werden der Konditioniereinrichtungs-Steuerungseinheit 15 als Istwerte beispielsweise die gemessene Durchflussmenge (z.B. Fluid-Massenstrom oder Fluid-Volumenstrom) der ersten und zweiten Durchfluss-Messeinrichtung 5, 8 zugeführt und Stellgrößen werden an das erste und zweite Stellorgan 6, 7 übermittelt. Dadurch kann ein vom Simulationsmodell 21 vorgegebener Sollwert der Durchflussmenge (z.B. Fluid-Massenstrom) eingeregelt werden, welche dem Prüfling P zugeführt wird. Vorzugsweise wird dabei die (Gesamt-) Durchflussmenge des Fluids über die Konditioniereinrichtung 1 im Wesentlichen konstant gehalten, beispielsweise durch eine entsprechende Steuerung der Fördereinrichtung 10 und die Regelung auf den Sollwert erfolgt durch gegengleiches Öffnen bzw. Schließen der Stellorgane 6, 7.

Dadurch können beispielsweise schwankende Zustände des unkonditionierten Fluids (beispielsweise Luft), das der Konditioniereinrichtung 1 über den Fluid-Einlass 2E zugeführt wird, wieder auszugleichen werden. Um eine möglichst hohe Regeldynamik zu erreichen, werden, wie bereits erwähnt, vorzugsweise Messeinrichtungen (z.B. Durchfluss-Messeinrichtungen 5, 8) mit möglichst geringer Verzugszeit der Messwert-Erfassung sowie Stellglieder (z.B. elektrisch ansteuerbare Stellorgane 6, 7) mit möglichst geringer Schaltzeit verwendet. Im gezeigten Beispiel in Fig.2 ist das Simulationsmodell 21 in der Prüfstands-Steuerungseinheit 20 implementiert. Natürlich könnte das Simulationsmodell 21 aber natürlich auch in der Konditioniereinrichtungs-Steuerungseinheit 15 implementiert sein.

## Patentansprüche

1. Konditioniereinrichtung (1) zur Versorgung eines Prüflings (P) auf einem Prüfstand (18) mit einem konditionierten Fluid, wobei die Konditioniereinrichtung (1) eine Fluidleitung (2) aufweist, die einen Fluid-Einlass (2E) mit einem Fluid-Auslass (2A) verbindet, wobei unkonditioniertes Fluid über den Fluid-Einlass (2E) der Konditioniereinrichtung (1) zuführbar ist und konditioniertes Fluid über den Fluid-Auslass (2A) dem Prüfling (P) zuführbar ist und wobei in der Fluidleitung (2) zwischen dem Fluid-Einlass (2E) und dem Fluid-Auslass (2A) zumindest eine Konditioniereinheit (K) zur Veränderung einer Zustandsgröße des Fluids vorgesehen ist, wobei eine erste Bypass-Leitung (3) zur Einstellung einer vorgegebenen Durchflussmenge des Fluids in der ersten Bypass-Leitung (3) vorgesehen ist, welche eine zwischen dem Fluid-Einlass (2E) und der zumindest einen Konditioniereinheit (K) liegende erste Bypass-Ausmündung (3A) aus der Fluidleitung (2) mit einer zwischen der zumindest einen Konditioniereinheit (K) und dem Fluid-Auslass (2A) liegenden ersten Bypass-Einmündung (3E) in die Fluidleitung (2) verbindet, wobei eine zweite Bypass-Leitung (4) zur Einstellung einer veränderlichen Durchflussmenge des Fluids in der zweiten Bypass-Leitung (4) vorgesehen ist, welche eine zwischen der ersten Bypass-Ausmündung (3A) und der zumindest einen Konditioniereinheit (K) liegende zweite Bypass-Ausmündung (4A) aus der Fluidleitung (2) mit einer zwischen der zumindest einen Konditioniereinheit (K) und der ersten Bypass-Einmündung (3E) liegenden zweiten Bypass-Einmündung (4E) in die Fluidleitung (2) verbindet, **dadurch gekennzeichnet,**
**dass** in der Fluidleitung (2) zwischen der ersten Bypass-Einmündung (3E) und der zweiten Bypass-Einmündung (4E) eine erste Durchfluss-Messeinrichtung (5) vorgesehen ist, **dass** in der Fluidleitung (2) zwischen der ersten Bypass-Einmündung (3E) und dem Fluid-Auslass (2A) oder zwischen dem Fluid-Einlass (2E) und der ersten Bypass-Ausmündung (3A) ein, vorzugsweise elektrisch ansteuerbares, erstes Stellorgan (6) zur Veränderung der Durchflussmenge des Fluids vorgesehen ist, **und dass** in der zweiten Bypass-Leitung (4) ein, vorzugsweise elektrisch ansteuerbares, zweites Stellorgan (7) zur Einstellung der veränderlichen Durchflussmenge des Fluids vorgesehen ist und/oder dass in der ersten Bypass-Leitung (3) ein Drosselorgan (9) zur Einstellung der vorgegebenen Durchflussmenge des Fluids und eine zweite Durchfluss-Messeinrichtung (8) vorgesehen sind.

2. Konditioniereinrichtung (1) nach Anspruch 1, **dadurch gekennzeichnet, dass** mehrere Konditioniereinheiten (K) zur Veränderung jeweils einer Zustandsgröße des Fluids zwischen der zweiten Bypass-Ausmündung (4A) und der zweiten Bypass-Einmündung (4E) vorzugsweise seriell in der Fluidleitung (2) angeordnet sind.

3. Konditioniereinrichtung (1) nach einem der Ansprüche 1 bis 2, **dadurch gekennzeichnet, dass** als Konditioniereinheit (K) eine Fördereinrichtung (10) und/oder eine Wärmesenke (11) und/oder eine Wärmequelle (12) und/oder eine Befeuchter (13) und/oder einen Trockner vorgesehen sind.

4. Konditioniereinrichtung (1) nach Anspruch 3, **dadurch gekennzeichnet, dass** als Fördereinrichtung (10) eine Pumpe oder ein Gebläse vorgesehen ist und/oder dass als Wärmesenke (11) ein Wärmetauscher vorgesehen ist und/oder dass als Wärmequelle (12) eine elektrische Heizeinrichtung oder ein Wärmetauscher vorgesehen ist und/oder dass als Befeuchter (13) ein Dampferzeuger vorgesehen ist.

5. Konditioniereinrichtung (1) nach einem der Ansprüche 1 bis 4, **dadurch gekennzeichnet, dass** die Konditioniereinrichtung (1) ein Gehäuse aufweist, wobei zumindest die zumindest eine Konditioniereinheit (K) im Gehäuse (14) angeordnet ist.

6. Konditioniereinrichtung (1) nach Anspruch 5, **dadurch gekennzeichnet, dass** zumindest die zweite Bypass-Leitung (4) im Gehäuse (14) angeordnet ist, wobei vorzugsweise beide Bypass-Leitungen (3, 4) im Gehäuse (14) angeordnet sind und dass der Fluid-Auslass (2A) und/oder der Fluid-Einlass (2E) am Gehäuse (4) angeordnet sind oder außerhalb des Gehäuses (14) liegen.

7. Konditioniereinrichtung (1) nach einem der Ansprüche 1 bis 6, **dadurch gekennzeichnet, dass** in der Konditioniereinrichtung (1) eine Konditioniereinrichtungs-Steuerungseinheit (15) zur Steuerung der Konditioniereinrichtung (1) vorgesehen ist, wobei die Konditioniereinrichtungs-Steuerungseinheit (15) vorzugsweise im Gehäuse (14) angeordnet ist.

8. Konditioniereinrichtung (1) nach Anspruch 7, **dadurch gekennzeichnet, dass** die Konditioniereinrichtungs-Steuerungseinheit (15) zum Empfangen von Messwerten mit der ersten und der zweiten Durchfluss-Messeinrichtung (5, 8) verbunden ist und/oder dass die Konditioniereinrichtungs-Steuerungseinheit (15) mit der zumindest einen Konditioniereinheit (K) zur Steuerung der zumindest einen Konditioniereinheit (K) verbunden ist und/oder mit dem ersten und/oder zweiten Stellorgan (6, 7) zur Steuerung des ersten und/oder zweiten Stellorgans (6, 7) verbunden ist, und/oder dass die Konditioniereinrichtungs-Steuerungseinheit (15) eine Kommunikations-Schnittstelle (16) zur Verbindung der Konditioniereinrichtung (1) mit einer übergeordneten Steuerungseinheit (17) aufweist.

9. Prüfstand (18) mit einem Prüfling (P) und mit einer Konditioniereinrichtung (1) zur Versorgung des Prüflings (P) mit einem konditionierten Fluid, **dadurch gekennzeichnet, dass** die Konditioniereinrichtung (1) nach einem der Ansprüche 1 bis 8 ausgebildet ist und dass der Fluid-Auslass (2A) der Konditioniereinrichtung (1) mit einem Fluid-Eintritt (PE) des Prüflings (P) verbunden ist.

10. Prüfstand (18) nach Anspruch 9, **dadurch gekennzeichnet, dass** ein geschlossener Konditionierkreislauf vorgesehen ist, indem ein mit dem Fluid-Eintritt (PE) kommunizierender Fluid-Austritt (PA) des Prüflings (P) mit dem Fluid-Einlass (2E) der Fluidleitung (2) der Konditioniereinrichtung (1) verbunden ist **oder dass** ein offener Konditionierkreislauf vorgesehen ist, indem der Fluid-Einlass (2E) der Fluidleitung (2) der Konditioniereinrichtung (1) mit einer externen Fluid-Quelle verbunden ist und der Fluid-Austritt (PA) des Prüflings (P) mit einer externen Fluid-Senke verbunden ist.

11. Prüfstand (18) nach Anspruch 10, **dadurch gekennzeichnet, dass** der Prüfling (P) in einer geschlossenen Prüfzelle (19, 19a) angeordnet ist und dass die Fluid-Quelle innerhalb oder außerhalb der Prüfzelle (19, 19a) vorgesehen und/oder dass die Fluid-Senke innerhalb oder außerhalb der Prüfzelle (19, 19a) vorgesehen ist.

12. Prüfstand (18) nach einem der Ansprüche 9 bis 11, **dadurch gekennzeichnet, dass** am Prüfstand (18) eine Prüfstands-Steuerungseinheit (20) zur Steuerung des Prüfstands (18) vorgesehen ist, wobei die Konditioniereinrichtung (1) über die Prüfstands-Steuerungseinheit (20) steuerbar ist.

13. Prüfstand (18) nach Anspruch 12, **dadurch gekennzeichnet, dass** die Konditioniereinrichtung (1) unmittelbar von der Prüfstands-Steuerungseinheit (20) steuerbar ist, indem die zumindest eine Konditioniereinheit (K) und/oder das erste und/oder zweite Stellorgan (6, 7) und/oder die erste und/oder zweite Durchfluss-Messeinrichtung (5, 8) unmittelbar mit der Prüfstands-Steuerungseinheit (20) verbunden sind **oder dass** die Konditioniereinrichtung (1) mittelbar von der Prüfstands-Steuerungseinheit (20) steuerbar ist, indem die Konditioniereinrichtungs-Steuerungseinheit (15) der Konditioniereinrichtung (1) über die Kommunikations-Schnittstelle (16) mit der Prüfstands-Steuerungseinheit (20) verbunden ist, **und/oder dass** in der Prüfstands-Steuerungseinheit (20) und/oder in der Konditioniereinrichtungs-Steuerungseinheit (15) ein Simulationsmodell (21) zur Simulation eines Betriebszustandes des Prüflings (P) implementiert ist **und dass** die Prüfstands-Steuerungseinheit (20) und/oder die Konditioniereinrichtungs-Steuerungseinheit (15) dazu ausgebildet sind, die Konditioniereinrichtung (1) auf Basis des Simulationsmodells (21) zu steuern, um die zumindest eine Zustandsgröße des Fluids zu verändern, insbesondere auf einen durch das Simulationsmodell (21) vorgegebenen Sollwert zu regeln.

14. Verwendung der Konditioniereinrichtung (1) nach einem der Ansprüche 1 bis 8 zur Versorgung eines Prüflings (P) auf einem Prüfstand (18) mit einem konditionierten, insbesondere gasförmigen, Fluid, wobei unkonditioniertes Fluid vom Fluid-Einlass (2E) der zumindest einen Konditioniereinheit (K) zugeführt wird, wobei das unkonditionierte Fluid in der zumindest einen Konditioniereinheit (K) konditioniert wird, indem eine Zustandsgröße des Fluids von der Konditioniereinheit (K) verändert wird und wobei das konditionierte Fluid über den Fluid-Auslass (2A) der Fluidleitung (2) dem Prüfling (P) zugeführt wird.

15. Verwendung nach Anspruch 14, wobei zumindest ein Teil des konditionierten Fluids in der Konditioniereinrichtung (1) rezirkuliert wird, indem das Fluid stromabwärts der zumindest einen Konditioniereinheit (K) über die erste und zweite Bypass-Leitung (3, 4) stromaufwärts der zumindest einen Konditioniereinheit (K)zugeführt wird, und/oder wobei der Konditioniereinrichtungs-Steuerungseinheit (15) oder einer damit verbundenen übergeordneten Prüfstands-Steuerungseinheit (20), vorzugsweise mittels des Simulationsmodells (21), ein Sollwert zumindest einer Zustandsgröße für das dem Prüfling (P) zuzuführende konditionierte Fluid vorgegeben wird, wobei der Konditioniereinrichtungs-Steuerungseinheit (15) oder der übergeordneten Prüfstands-Steuerungseinheit (20) zumindest ein gemessener Istwert der Zustandsgröße übermittelt wird und wobei die Konditioniereinrichtungs-Steuerungseinheit (15) oder die übergeordneten Prüfstands-Steuerungseinheit (20) auf Basis des Sollwertes und des zumindest einen Istwertes zumindest eine Stellgröße für zumindest ein Stellglied der Konditioniereinrichtung (1) ermittelt und das zumindest eine Stellglied mit der Stellgröße ansteuert.

16. Verwendung nach Anspruch 15, wobei als Zustandsgröße eine Durchflussmenge des Fluids, vorzugsweise ein Fluid-Massenstrom, verwendet wird, wobei Istwerte der Durchflussmenge des Fluids mittels der ersten und zweiten Durchfluss-Messeinrichtung (5, 8) erfasst werden und wobei als Stellglieder das erste und zweite Stellorgan (6, 7) verwendet werden.

## Claims

1. Conditioning device (1) for supplying a device under test (P) on a test bench (18) with a conditioned fluid, wherein the conditioning device (1) has a fluid line (2) which connects a fluid inlet (2E) to a fluid outlet (2A), wherein unconditioned fluid can be supplied to the conditioning device (1) via the fluid inlet (2E), and conditioned fluid can be supplied to the device under test (P) via the fluid outlet (2A), and wherein at least one conditioning unit (K) for changing a state variable of the fluid is provided in the fluid line (2) between the fluid inlet (2E) and the fluid outlet (2A), wherein a first bypass line (3) is provided for adjusting a predetermined flow rate of the fluid in the first bypass line (3) connecting a first bypass outlet (3A) from the fluid line (2), which is located between the fluid inlet (2E) and the at least one conditioning unit (K), to a first bypass inlet (3E) into the fluid line (2), which is located between the at least one conditioning unit (K) and the fluid outlet (2A), wherein a second bypass line (4) is provided for adjusting a variable flow rate of the fluid in the second bypass line (4) connecting a second bypass outlet (4A) from the fluid line (2), which is located between the first bypass outlet (3A) and the at least one conditioning unit (K), to a second bypass inlet (4E) into the fluid line (2), which is located between the at least one conditioning unit (K) and the first bypass inlet (3E), **characterized in that** a first flow measuring device (5) is provided in the fluid line (2) between the first bypass inlet (3E) and the second bypass inlet (4E), **in that** a first control element (6), preferably being electrically controlled, is provided in the fluid line (2) between the first bypass inlet (3E) and the fluid outlet (2A), or between the fluid inlet (2E) and the first bypass outlet (3A) for changing the flow rate of the fluid, **and in that** a second control element (7), preferably being electrically controlled, is provided in the second bypass line (4) for adjusting the variable flow rate of the fluid, **and/or in that** a throttle (9) for adjusting the predetermined flow rate of the fluid and a second flow measuring device (8) are provided in the first bypass line (3).

2. Conditioning device (1) according to claim 1, **characterized in that** a plurality of conditioning units (K) for changing a state variable of the fluid in each case are arranged, preferably in series, between the second bypass outlet (4A) and the second bypass inlet (4E) in the fluid line (2).

3. Conditioning device (1) according to either of claims 1 to 2,
**characterized in that** a conveying device (10) and/or a heat sink (11) and/or a heat source (12) and/or a humidifier (13) and/or a dryer are provided as the conditioning unit (K).

4. Conditioning device (1) according to claim 3, **characterized in that** a pump or a blower is provided as the conveying device (10), **and/or in that** a heat exchanger is provided as the heat sink (11), **and/or in that** an electric heating device or a heat exchanger is provided as the heat source (12), **and/or in that** a steam generator is provided as the humidifier (13).

5. Conditioning device (1) according to any of claims 1 to 4,
**characterized in that** the conditioning device (1) comprises a housing, wherein at least the at least one conditioning unit (K) is arranged in the housing (14).

6. Conditioning device (1) according to claim 5, **characterized in that** at least the second bypass line (4) is arranged in the housing (14), wherein preferably both bypass lines (3, 4) are arranged in the housing (14), **and in that** the fluid outlet (2A) and/or the fluid inlet (2E) are arranged on the housing (4) or are located outside the housing (14).

7. Conditioning device (1) according to any of claims 1 to 6,
**characterized in that** a conditioning device control unit (15) for controlling the conditioning device (1) is provided in the conditioning device (1), wherein the conditioning device control unit (15) is preferably arranged in the housing (14).

8. Conditioning device (1) according to claim 7, **characterized in that** the conditioning device control unit (15) is connected to the first and the second flow measuring device (5, 8) for receiving measured values, **and/or in that** the conditioning device control unit (15) is connected to the at least one conditioning unit (K) for controlling the at least one conditioning unit (K), and/or is connected to the first and/or second control element (6, 7) for controlling the first and/or second control element (6, 7), **and/or in that** the conditioning device control unit (15) has a communication interface (16) for connecting the conditioning device (1) to a higher-level control unit (17).

9. Test bench (18) with a device under test (P) and with a conditioning device (1) for supplying the device under test (P) with a conditioned fluid,
**characterized in that** the conditioning device (1) is designed according to any of claims 1 to 8, **and in that** the fluid outlet (2A) of the conditioning device (1) is connected to a fluid inflow (PE) of the device under test (P).

10. Test bench (18) according to claim 9, **characterized in that** a closed conditioning circuit is provided by connecting a fluid outflow (PA) of the device under test (P), which outflow communicates with the fluid inflow (PE), to the fluid inlet (2E) of the fluid line (2) of the conditioning device (1), **or in that** an open conditioning circuit is provided by connecting the fluid inlet (2E) of the fluid line (2) of the conditioning device (1) to an external fluid source, and connecting the fluid outflow (PA) of the device under test (P) to an external fluid sink.

11. Test bench (18) according to claim 10, **characterized in that** the device under test (P) is arranged in a closed test cell (19, 19a), **and in that** the fluid source is provided inside or outside the test cell (19, 19a), **and/or in that** the fluid sink is provided inside or outside the test cell (19, 19a).

12. Test bench (18) according to any of claims 9 to 11, **characterized in that** a test bench control unit (20) for controlling the test bench (18) is provided on the test bench (18), wherein the conditioning device (1) can be controlled via the test bench control unit (20).

13. Test bench (18) according to claim 12, **characterized in that** the conditioning device (1) can be controlled directly by the test bench control unit (20) by connecting the at least one conditioning unit (K), and/or the first and/or second control element (6, 7), and/or the first and/or second flow measuring device (5, 8) directly to the test bench control unit (20), **or in that** the conditioning device (1) can be controlled indirectly by the test bench control unit (20) by connecting the conditioning device control unit (15) of the conditioning device (1) to the test bench control unit (20) via the communication interface (16), **and/or in that** a simulation model (21) for simulating an operating state of the device under test (P) is implemented in the test bench control unit (20) and/or in the conditioning device control unit (15), **and in that** the test bench control unit (20) and/or the conditioning device control unit (15) are designed to control the conditioning device (1) on the basis of the simulation model (21) to change the at least one state variable of the fluid, in particular to control the at least one state variable with respect to a setpoint value predetermined by the simulation model (21).

14. Use of the conditioning device (1) according to any of claims 1 to 8 for supplying a device under test (P) on a test bench (18) with a conditioned, in particular gaseous, fluid, wherein unconditioned fluid is supplied from the fluid inlet (2E) to the at least one conditioning unit (K), wherein the unconditioned fluid is conditioned in the at least one conditioning unit (K) by changing a state variable of the fluid by the conditioning unit (K), and wherein the conditioned fluid is supplied to the device under test (P) via the fluid outlet (2A) of the fluid line (2).

15. Use according to claim 14, wherein at least a portion of the conditioned fluid is recirculated in the conditioning device (1) by supplying the fluid that is downstream of the at least one conditioning unit (K), via the first and second bypass lines (3, 4), upstream of the at least one conditioning unit (K), and/or wherein a setpoint value of at least one state variable for the conditioned fluid to be supplied to the device under test (P) is predetermined to the conditioning device control unit (15) or to a higher-level test bench control unit (20) connected thereto, preferably by the simulation model (21), wherein at least one measured actual value of the state variable is transmitted to the conditioning device control unit (15) or the higher-level test bench control unit (20), and wherein the conditioning device control unit (15) or the higher-level test bench control unit (20) determines at least one manipulated variable for at least one control element of the conditioning device (1) on the basis of the setpoint value and the at least one actual value, and controls the at least one control element using the manipulated variable.

16. Use according to claim 15, wherein a flow rate of the fluid, preferably a fluid mass flow rate, is used as the state variable, wherein actual values of the flow rate of the fluid are detected by the first and the second flow measuring device (5, 8) and wherein the first and the second control element (6, 7) are used as control elements.

## Revendications

1. Dispositif de conditionnement (1) permettant d'alimenter un objet en essai (P) sur un banc d'essai (18) en fluide conditionné, le dispositif de conditionnement (1) présentant une conduite de fluide (2) qui relie une entrée de fluide (2E) à une sortie de fluide (2A), du fluide non conditionné pouvant être amené au dispositif de conditionnement (1) par l'intermédiaire de l'entrée de fluide (2E) et du fluide conditionné pouvant être amené à l'objet en essai (P) par l'intermédiaire de la sortie de fluide (2A), et au moins une unité de conditionnement (K) étant prévue dans la conduite de fluide (2) entre l'entrée de fluide (2E) et la sortie de fluide (2A) pour la modification d'une grandeur d'état du fluide, une première conduite de dérivation (3) étant prévue pour le réglage d'un débit prédéfini de fluide dans la première conduite de dérivation (3), laquelle relie une première ouverture d'évacuation de dérivation (3A), située entre l'entrée de fluide (2E) et l'au moins une unité de conditionnement (K), à partir de la conduite de fluide (2) à une première embouchure de dérivation (3E), située entre l'au moins une unité de conditionnement (K) et la sortie de fluide (2A), dans la conduite de fluide (2), une seconde conduite de dérivation (4) étant prévue pour le réglage d'un débit variable de fluide dans la seconde conduite de dérivation (4), laquelle relie une seconde ouverture d'évacuation de dérivation (4A), située entre la première ouverture d'évacuation de dérivation (3A) et l'au moins une unité de conditionnement (K), à partir de la conduite de fluide (2) à une seconde embouchure de dérivation (4E), située entre l'au moins une unité de conditionnement (K) et la première embouchure de dérivation (3E), dans la conduite de fluide (2), **caractérisé en ce qu'**un premier dispositif de mesure de débit (5) est prévu dans la conduite de fluide (2) entre la première embouchure de dérivation (3E) et la seconde embouchure de dérivation (4E), **en ce qu'**il est prévu dans la conduite de fluide (2), entre la première embouchure de dérivation (3E) et la sortie de fluide (2A) ou entre l'entrée de fluide (2E) et la première ouverture d'évacuation de dérivation (3A), un premier organe de réglage (6), de préférence pouvant être commandé électriquement, pour la modification du débit du fluide, **et en ce qu'**il est prévu dans la seconde conduite de dérivation (4) un second organe de réglage (7), de préférence pouvant être commandé électriquement, pour le réglage du débit variable du fluide, **et/ou en ce que,** dans la première conduite de dérivation (3), un organe d'étranglement (9) pour le réglage du débit prédéfini du fluide et un second dispositif de mesure de débit (8) sont prévus.

2. Dispositif de conditionnement (1) selon la revendication 1,
**caractérisé en ce que** plusieurs unités de conditionnement (K) pour la modification de respectivement une grandeur d'état du fluide sont disposées, de préférence en série dans la conduite de fluide (2), entre la seconde ouverture d'évacuation de dérivation (4A) et la seconde embouchure de dérivation (4E).

3. Dispositif de conditionnement (1) selon l'une des revendications 1 à 2, **caractérisé en ce qu'**il est prévu comme unité de conditionnement (K) un dispositif de refoulement (10) et/ou un puits de chaleur (11) et/ou une source de chaleur (12) et/ou un humidificateur (13) et/ou un séchoir.

4. Dispositif de conditionnement (1) selon la revendication 3,
**caractérisé en ce qu'**il est prévu comme dispositif de refoulement (10) une pompe ou une soufflante **et/ou en ce qu'**il est prévu comme puits de chaleur (11) un échangeur de chaleur **et/ou en ce qu'**il est prévu comme source de chaleur (12) un dispositif de chauffage électrique ou un échangeur de chaleur **et/ou en ce qu'**il est prévu comme humidificateur (13) un générateur de vapeur.

5. Dispositif de conditionnement (1) selon l'une des revendications 1 à 4, **caractérisé en ce que** le dispositif de conditionnement (1) présente un boîtier, au moins l'au moins une unité de conditionnement (K) étant disposée dans le boîtier (14).

6. Dispositif de conditionnement (1) selon la revendication 5,
**caractérisé en ce qu'**au moins la seconde conduite de dérivation (4) est disposée dans le boîtier (14), de préférence les deux conduites de dérivation (3, 4) étant disposées dans le boîtier (14), **et en ce que** la sortie de fluide (2A) et/ou l'entrée de fluide (2E) sont disposées sur le boîtier (4) ou sont situées à l'extérieur du boîtier (14).

7. Dispositif de conditionnement (1) selon l'une des revendications 1 à 6, **caractérisé en ce qu'**une unité de commande de dispositif de conditionnement (15) est prévue dans le dispositif de conditionnement (1) pour la commande du dispositif de conditionnement (1), l'unité de commande de dispositif de conditionnement (15) étant de préférence disposée dans le boîtier (14).

8. Dispositif de conditionnement (1) selon la revendication 7,
**caractérisé en ce que** l'unité de commande de dispositif de conditionnement (15) est reliée aux premier et second dispositifs de mesure de débit (5, 8) pour la réception de valeurs de mesure **et/ou en ce que** l'unité de commande de dispositif de conditionnement (15) est reliée à l'au moins une unité de conditionnement (K) pour la commande de l'au moins une unité de conditionnement (K) et/ou est reliée au premier et/ou au second organe de réglage (6, 7) pour la commande du premier et/ou du second organe de réglage (6, 7), **et/ou en ce que** l'unité de commande de dispositif de conditionnement (15) présente une interface de communication (16) pour la liaison du dispositif de conditionnement (1) à une unité de commande (17) maîtresse.

9. Banc d'essai (18) comportant un objet en essai (P) et comportant un dispositif de conditionnement (1) permettant d'alimenter l'objet en essai (P) en fluide conditionné, **caractérisé en ce que** le dispositif de conditionnement (1) est réalisé selon l'une des revendications 1 à 8 **et en ce que** la sortie de fluide (2A) du dispositif de conditionnement (1) est reliée à une entrée de fluide (PE) de l'objet en essai (P).

10. Banc d'essai (18) selon la revendication 9, **caractérisé en ce qu'**un circuit de conditionnement fermé est prévu par le fait qu'une sortie de fluide (PA) de l'objet en essai (P) communiquant avec l'entrée de fluide (PE) est reliée à l'entrée de fluide (2E) de la conduite de fluide (2) du dispositif de conditionnement (1), **ou en ce qu'**un circuit de conditionnement ouvert est prévu par le fait que l'entrée de fluide (2E) de la conduite de fluide (2) du dispositif de conditionnement (1) est reliée à une source de fluide externe et la sortie de fluide (PA) de l'objet en essai (P) est reliée à un puits de fluide externe.

11. Banc d'essai (18) selon la revendication 10, **caractérisé en ce que** l'objet en essai (P) est disposé dans une chambre d'essai fermée (19, 19a) **et en ce que** la source de fluide est prévue à l'intérieur ou à l'extérieur de la chambre d'essai (19, 19a) **et/ou en ce que** le puits de fluide est prévu à l'intérieur ou à l'extérieur de la chambre d'essai (19, 19a).

12. Banc d'essai (18) selon l'une des revendications 9 à 11,
**caractérisé en ce qu'**une unité de commande de banc d'essai (20) est prévue sur le banc d'essai (18) pour la commande du banc d'essai (18), le dispositif de conditionnement (1) pouvant être commandé par l'intermédiaire de l'unité de commande de banc d'essai (20).

13. Banc d'essai (18) selon la revendication 12, **caractérisé en ce que** le dispositif de conditionnement (1) peut être commandé directement par l'unité de commande de banc d'essai (20) par le fait que l'au moins une unité de conditionnement (K) et/ou le premier et/ou le second organe de réglage (6, 7) et/ou le premier et/ou le second dispositif de mesure de débit (5, 8) sont reliés directement à l'unité de commande de banc d'essai (20) **ou en ce que** le dispositif de conditionnement (1) peut être commandé indirectement par l'unité de commande de banc d'essai (20) par le fait que l'unité de commande de dispositif de conditionnement (15) du dispositif de conditionnement (1) est reliée à l'unité de commande de banc d'essai (20) par l'intermédiaire de l'interface de communication (16), **et/ou en ce qu'**un modèle de simulation (21) est implémenté dans l'unité de commande de banc d'essai (20) et/ou dans l'unité de commande de dispositif de conditionnement (15) pour la simulation d'un état de fonctionnement de l'objet en essai (P) **et en ce que** l'unité de commande de banc d'essai (20) et/ou l'unité de commande de dispositif de conditionnement (15) sont configurées pour commander le dispositif de conditionnement (1) sur la base du modèle de simulation (21) afin de modifier l'au moins une grandeur d'état du fluide, en particulier afin de la régler à une valeur de consigne prédéfinie par le modèle de simulation (21).

14. Utilisation du dispositif de conditionnement (1) selon l'une des revendications 1 à 8 pour l'alimentation d'un objet en essai (P) sur un banc d'essai (18) en fluide conditionné, en particulier gazeux, du fluide non conditionné étant amené à partir de l'entrée de fluide (2E) de l'au moins une unité de conditionnement (K), le fluide non conditionné étant conditionné dans l'au moins une unité de conditionnement (K) par le fait qu'une grandeur d'état du fluide est modifiée par l'unité de conditionnement (K) et le fluide conditionné étant amené à l'objet en essai (P) par l'intermédiaire de la sortie de fluide (2A) de la conduite de fluide (2).

15. Utilisation selon la revendication 14, au moins une partie du fluide conditionné étant recirculée dans le dispositif de conditionnement (1) par le fait que le fluide est amené en aval de l'au moins une unité de conditionnement (K) par l'intermédiaire des première et seconde conduites de dérivation (3, 4) en amont de l'au moins une unité de conditionnement (K), et/ou une valeur de consigne d'au moins une grandeur d'état pour le fluide conditionné à amener à l'objet en essai (P) étant fournie à l'unité de commande de dispositif de conditionnement (15) ou à une unité de commande de banc d'essai (20) maîtresse reliée à celle-ci, de préférence au moyen du modèle de simulation (21), au moins une valeur réelle mesurée de la grandeur d'état étant transmise à l'unité de commande de dispositif de conditionnement (15) ou à l'unité de commande de banc d'essai (20) maîtresse, et l'unité de commande de dispositif de conditionnement (15) ou l'unité de commande de banc d'essai (20) maîtresse déterminant, sur la base de la valeur de consigne et de l'au moins une valeur réelle, au moins une grandeur de réglage pour au moins un organe de réglage du dispositif de conditionnement (1) et commandant l'au moins un organe de réglage à l'aide de la grandeur de réglage.

16. Utilisation selon la revendication 15, un débit du fluide, de préférence un flux massique de fluide, étant utilisé comme grandeur d'état, des valeurs réelles du débit du fluide étant détectées à l'aide des premier et second dispositifs de mesure de débit (5, 8) et les premier et second organes de réglage (6, 7) étant utilisés comme organes de réglage.
